(19) Europäisches Patentamt
European Patent Office
Office européen des brevets

(11) EP 0 613 910 B1

(12) # EUROPÄISCHE PATENTSCHRIFT

(45) Veröffentlichungstag und Bekanntmachung des Hinweises auf die Patenterteilung:
**28.08.1996 Patentblatt 1996/35**

(51) Int Cl.6: **C08F 8/14**, C08F 8/30

(21) Anmeldenummer: **94102446.5**

(22) Anmeldetag: **18.02.1994**

(54) **Polymethacrylsäureester, deren Estergruppen in alpha- und gegebenenfalls zusätzlich in omega-Stellung von den in der Kette befindlichen Estergruppen abweichen**

Poly methacrylic acid ester , containing, in the alpha and optionally in the omega position, ester groups which are different from those in the main chain

Poly ester d'acide méthacrylique , renfermant, en position alpha et éventuellement en position oméga, des groupes d'ester différents des groupes d'ester dans la chaîne

(84) Benannte Vertragsstaaten:
**BE CH DE FR GB IT LI NL**

(30) Priorität: **03.03.1993 DE 4306537**

(43) Veröffentlichungstag der Anmeldung:
**07.09.1994 Patentblatt 1994/36**

(73) Patentinhaber: **Th. Goldschmidt AG
D-45127 Essen (DE)**

(72) Erfinder:
- **Esselborn, Eberhard
D-45147 Essen (DE)**
- **Fock, Jürgen, Dr.
D-40470 Düsseldorf (DE)**

(56) Entgegenhaltungen:

| | |
|---|---|
| **EP-A- 0 373 494** | **EP-A- 0 523 480** |
| **FR-A- 1 323 426** | **US-A- 2 109 877** |
| **US-A- 2 915 481** | **US-A- 3 850 892** |

EP 0 613 910 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft neuartige Polymethacrylsäureester, deren Estergruppen in α- und gegebenenfalls zusätzlich in ω-Stellung von den in der Kette befindlichen Estergruppen abweichen. Die Erfindung betrifft ferner ein Verfahren zur Herstellung dieser Verbindungen durch Umesterung.

Durch Umesterung von Polyacrylsäurealkylestern (Alkylreste mit 1 bis 4 Kohlenstoffatomen) mit speziellen Alkoholen, die meist funktionelle Gruppen aufweisen, erhältliche funktionalisierte Polyacrylsäureester sind in jüngster Zeit mehrfach beschrieben worden, wie z.B. in der DE-PS 38 42 201 und DE-PS 38 42 202 sowie in den DE-OSen 39 06 702, 40 06 093, 41 23 478, 42 02 187 und 42 24 412. Diese Umesterungsprodukte haben gegenüber den analogen Copolymerisaten wesentliche Vorteile, wie z.B. eine wesentlich einheitlichere Molekulargewichtsverteilung. Sie sind weitgehend frei von monomeren Anteilen. Durch das Umesterungsverfahren gelingt überhaupt erst die Herstellung von Polyacrylsäureestern, deren alkoholische Esterkomponente olefinische Doppelbindungen aufweist, ohne Bildung von höhermolekularen Nebenprodukten. So ist es ohne weiteres möglich, Polyacrylsäureester mit Oleylalkohol und gleichzeitig mit weiteren Hydroxylgruppen aufweisenden Verbindungen umzuestern.

Bei diesen Umesterungsverfahren verläuft die Umesterung meist bis zu Umesterungsgraden von etwa 70 %, wobei Produkte mit zumindest angenähert statistischer Verteilung der durch die Umesterung eingeführten Alkohole längs der Polymerenkette erhalten werden.

Diese Umesterungsverfahren lassen sich nicht ohne weiteres mit den entsprechenden Polymethacrylsäurealkylestern durchführen.

Aus Chemical Abstracts 98 (No. 8, 54652f) ist es zwar bekannt, Polymethacrylsäureester mit einem großen Überschuß an Diethylaminoethanol bei Temperaturen von > 150°C in Gegenwart von Titanaten als Katalysatoren umzusetzen. Hierbei werden Polymere erhalten, bei denen ein Teil der Estergruppen mit Diethylaminoethanol umgeestert worden ist. Bei dieser Temperatur werden aber verhältnismäßig uneinheitliche Produkte erhalten, wobei thermische Zersetzungsprodukte nicht vermieden werden können.

Es wurde jedoch überraschenderweise gefunden, daß es bei Einhaltung bestimmter Strukturparameter für die umzusetzenden Polymethacrylsäureester und geeigneter Auswahl der Verfahrensbedingungen bei der Umesterung möglich ist, eine oder beide endständig gebundenen Estergruppen umzuestern. Dies ermöglicht die Herstellung von neuartigen Polymethacrylsäureestern, deren Estergruppen in α- und gegebenenfalls ω-Stellung von den in der Kette befindlichen Estergruppen abweichen.

Ein Gegenstand vorliegender Erfindung sind deshalb neuartige Polymethacrylsäureester der allgemeinen Formel

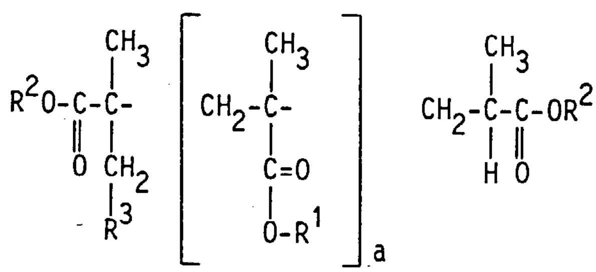

I

wobei die Reste

- $R^1$ gleich oder verschieden sind und Alkylreste mit 1 bis 8 Kohlenstoffatomen, Perfluoralkyl- oder Dialkylaminoalkylreste bedeuten und
- $R^2$ die Bedeutung der Reste $R^1$ haben oder von einem Alkohol $R^2OH$ abgeleitete Reste sind,
- $R^3$ der Rest eines an sich bekannten Kettenreglers ist, wobei der Rest $R^3$ frei von aktiven Wasserstoffatomen ist, und
- a eine Zahl ist, die im Mittel ≥ 4 ist,

mit der Maßgabe, daß der Alkohol $R^2OH$ einen höheren Siedepunkt als der Alkohol $R^1OH$ hat und im durchschnittlichen Molekül mindestens 1 Rest $R^2$ ungleich $R^1$ ist.

Der Rest $R^1$ ist vorzugsweise ein Methyl-, Butyl- oder Octylrest. Beispiele geeigneter Perfluoralkylreste sind der Trifluorethyl-, Pentafluorpropyl-, Nonafluorhexyl- und der Tridecafluoroctylrest.

$R^1$ kann auch die Bedeutung eines Dialkylaminoalkylrestes haben. Beispiele besonders geeigneter Dialkylaminoalkylreste sind die Dimethylaminoethyl- und Diethylaminoethylreste.

Der Rest $R^2$ kann die Bedeutung der Reste $R^1$ haben oder ist von dem Alkohol $R^2OH$ abgeleitet, der in Hinblick auf die Umesterungsreaktion einen höheren Siedepunkt als der Alkohol $R^1OH$ haben muß. Die Siedepunktdifferenz sollte ≥ 10°C sein. Dabei muß aber die Bedingung erfüllt sein, daß im durchschnittlichen Molekül mindestens 1 Rest $R^2$ ungleich $R^1$ ist. Vorzugsweise ist einer der beiden endständigen $R^2$-Reste ungleich $R^1$.

$R^3$ ist der Rest eines an sich bekannten Kettenreglers, wobei der Rest $R^3$ frei von aktiven Wasserstoffatomen ist. Beispiele für Kettenregler sind Mercaptane, Chloroform und Isopropylbenzol. Bevorzugtes Beispiel eines solchen, vom Kettenregler herrührenden Restes $R^3$ ist der Rest $-S-C_{12}H_{25}$. Weitere Beispiele für Reste, die vom Kettenregler herrühren, sind der von tert.-Dodecylmercaptan abgeleitete Rest und der Octadecyl- und Tetradecylmercaptanrest.

a ist eine Zahl, die im Mittel $\geq 4$ ist. Sie hat vorzugsweise einen Wert von 4 bis 500. Hieraus ergibt sich für die erfindungsgemäßen Polymeren ein Molgewichtsbereich von etwa 400 bis 100 000.

In den folgenden Abschnitten sind bevorzugte Bedeutungen für die Reste $R^2$ angegeben.

So ist $R^2$ vorzugsweise ein Alkylrest mit einer größeren Anzahl Kohlenstoffatome als $R^1$ oder ein Alkenylrest. Die Anzahl der Kohlenstoffatome kann bis zu 30 betragen. Dabei kann der Alkylrest gegebenenfalls inert, zum Beispiel durch Halogenreste, substituiert sein. $R^2$ kann auch ein Alkenylrest, vorzugsweise der Allyl-, Hexenyl- oder Oleylrest oder ein Rest der Formel

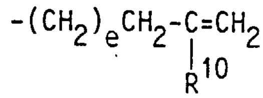

sein, wobei $R^{10}$ ein Wasserstoff- oder Methylrest und e eine Zahl von 0 bis 10 ist.

Weiter kann $R^2$ vorzugsweise ein $-R^4-OH$-Rest sein, wobei $R^4$ ein zweiwertiger aliphatischer Kohlenwasserstoffrest mit 2 bis 20 Kohlenstoffatomen ist. Beispiele solcher Reste $-R^4-OH$ sind $-(CH_2)_2-oH$, $-(CH_2)_4-OH$ oder $-(CH_2)_6-OH$.

$R^2$ ist in einer weiteren bevorzugten Form ein $-(C_nH_{2n}O-)_bR^5$ Rest, wobei $R^5$ ein Wasserstoff-, Alkyl-, Alkaryl-, Alkenyl- oder Sulfopropylrest, n eine Zahl von 2 bis 18 und b eine Zahl $\geq 1$ ist. Beispiele für die Reste $R^5$ sind Methyl-, Butyl-, Stearyl-, Allyl-, Hexenyl-, Nonylphenyl- oder Oleylreste.

Ist n = 2, enthält der Polyetherrest ausschließlich Oxyethyleneinheiten. Ist der Wert für n > 2, besteht der Polyetherrest aus Oxyethyleneinheiten und anteilig aus Oxyalkyleneinheiten, deren Kohlenstoffzahl zwischen 3 und 18 liegt. Dabei kann n den Wert einer gebrochenen Zahl zwischen 2 und 18 annehmen. Vorzugsweise besteht der Oxyalkylenblock aus Oxyethyleneinheiten, wobei gegebenenfalls zusätzlich zu den Oxypropylen- auch Oxybutyleneinheiten vorhanden sein können. Oxyalkyleneinheiten mit einer Kohlenstoffanzahl von 4 bis 18 sind dann bevorzugt, wenn oleophile Eigenschaften des Umesterungsproduktes angestrebt werden.

$R^2$ kann in einer weiteren bevorzugten Form auch ein

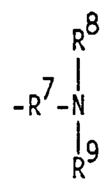

Rest oder der Rest

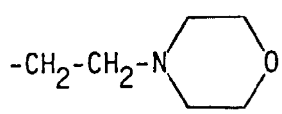

sein, wobei $R^7$ ein zweiwertiger aliphatischer Kohlenwasserstoffrest mit 2 bis 4 Kohlenstoffatomen in der Kohlenstoffkette oder der Rest $-(C_nH_{2n}O-)_mC_pH_{2p}$ - ist, und die Indices folgende Werte aufweisen: n = 2, 3 oder 4; m = 1 bis 20; p = 2, 3 oder 4.

$R^8$ und $R^9$ sind gleich oder verschieden und bedeuten jeweils Alkylreste mit 1 bis 18 Kohlenstoffatomen.

Das Stickstoffatom kann in protonierter oder quaternierter Form vorliegen.

Beispiele derartiger Reste sind

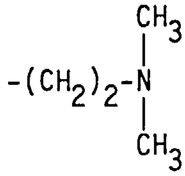 ; 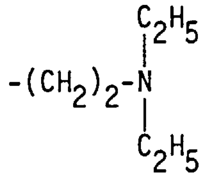 ; 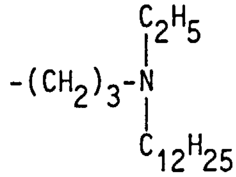 ; 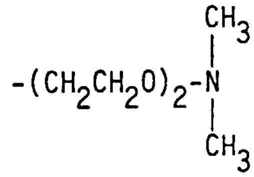 ;

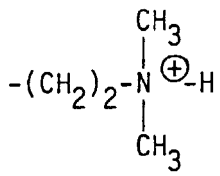
;
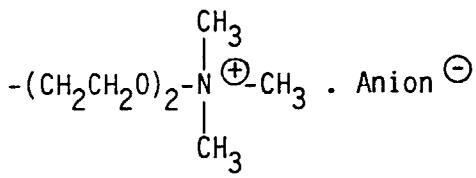

Der Rest $R^2$ kann auch die Bedeutung eines $-(CH_2)_cC_dF_{2d+1}$ Restes annehmen, wobei c eine Zahl von 2 bis 10 und d eine Zahl von 1 bis 12 ist. Bevorzugte Beispiele solcher Reste sind $-(CH_2)_2-C_6F_{13}$ oder $-(CH_2)_2-C_8F_{17}$.

Der Rest $R^2$ kann schließlich die Bedeutung des Restes

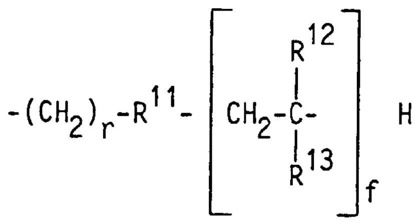

haben, wobei

- $R^{11}$ ein Sauerstoff- oder Schwefelrest,
- $R^{12}$ ein Wasserstoff- oder Methylrest,
- $R^{13}$ ein Phenyl-,

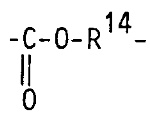
oder
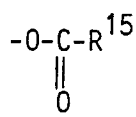

Rest ist, wobei

- $R^{14}$ ein Alkyl-, Alkylfluoralkyl- oder ein Dialkylaminoalkylrest ist, wobei das Stickstoffatom in protonierter oder quaternierter Form vorliegen kann,
- $R^{15}$ ein Alkylrest,

- r eine Zahl von 2 bis 6 und
- f eine Zahl von 2 bis 100 ist.

Beispiele solcher Reste sind der ω-Hydroxypolystyrol-, ω-Hydroxypoly-n-butylmethylacrylat-, ω-Hydroxypoly (diethylaminoethylmethacrylat)- und der ω-Hydroxypolyvinylpivalatrest.

Beispiele erfindungsgemäßer Polymethacrylsäureester sind:

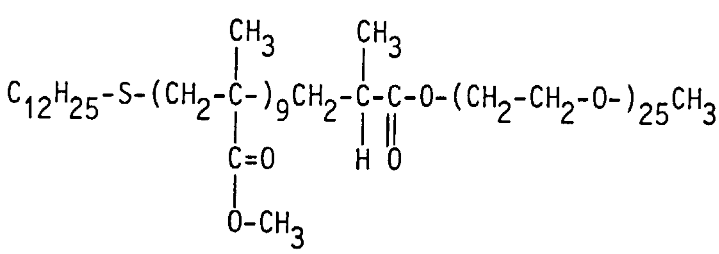

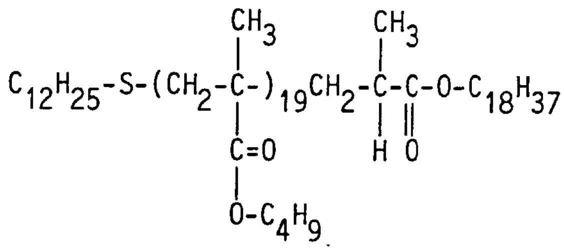

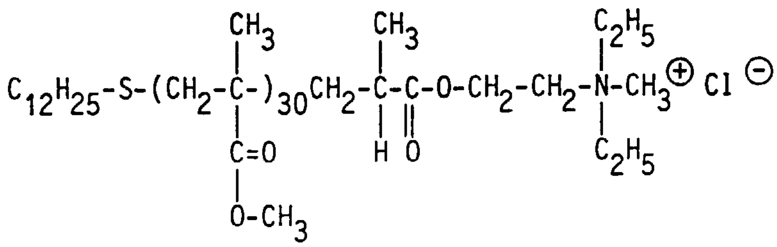

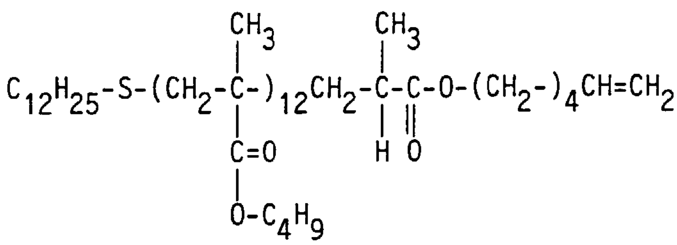

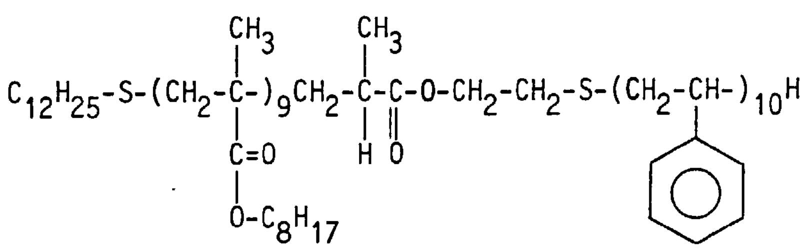

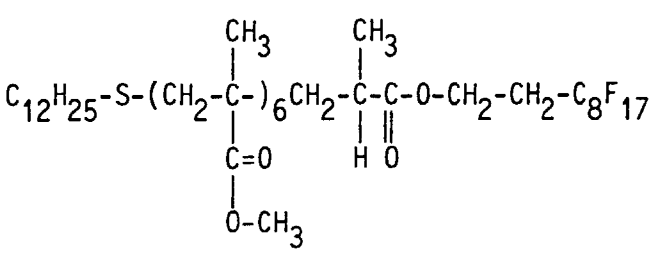

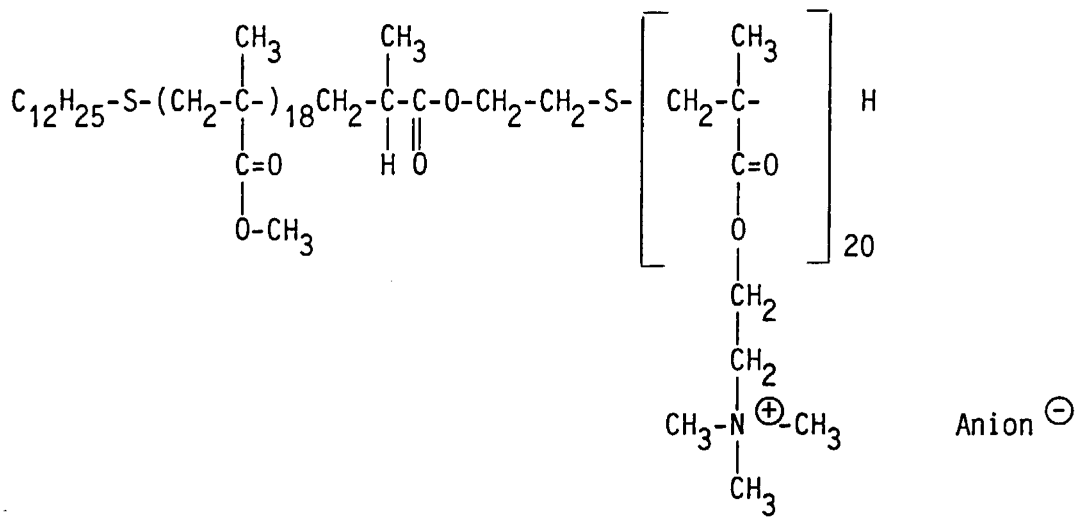

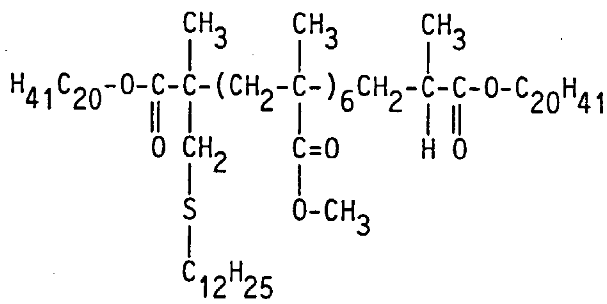

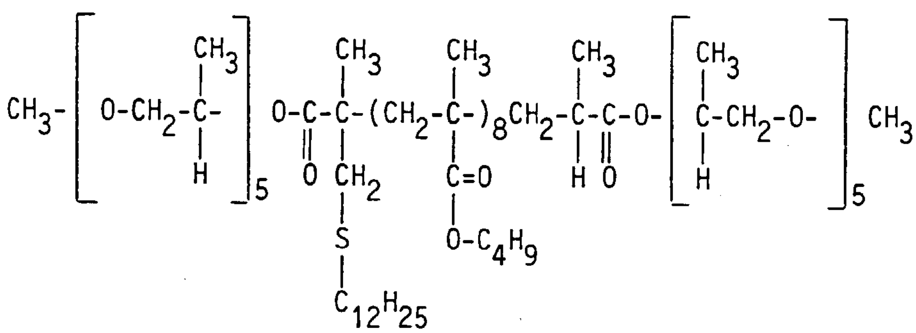

Dem Fachmann ist klar, daß die neuen Polymethacrylsäureester der allgemeinen Formel I Eigenschaften aufweisen, die anwendungstechnisch von großem Interesse sein können, indem zum Beispiel ihre Verträglichkeit mit anderen Medien in gewünschter Weise verändert werden kann. Dies gilt für die Oleophobie, die Hydrophilie und die schmutzabweisenden Eigenschaften. Durch geeignete Wahl der zur Umesterung verwendeten Alkohole können antistatische Eigenschaften erzielt werden. Enthalten die zur Umesterung verwendeten Alkohole zusätzliche funktionelle und weiterer Reaktion zugängliche Gruppen, wie etwa eine OH- oder $-CH=CH_2$-Gruppe, besteht die Möglichkeit, die erfindungsgemäßen Produkte zu Blockpolymeren des Typs ABA oder $(AB)_x$ weiter umzusetzen. Hierdurch wird die Herstellung neuartiger Blockpolymerer ermöglicht.

Ein weiterer Gegenstand der Erfindung ist ein Verfahren zur Herstellung der erfindungsgemäßen neuen Polymethacrylsäureester der Formel I. Das erfindungsgemäße Verfahren ist dadurch gekennzeichnet, daß man durch radikalische Polymerisation in Gegenwart eines Kettenreglers erhaltene Polymethacrylsäureester der allgemeinen Formel

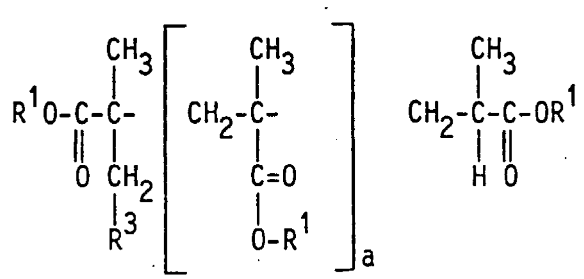 II

wobei die Reste $R^1$ und $R^3$ und der Index a die bereits angegebene Bedeutung haben, mit Alkoholen der Formel $R^2OH$ bei Temperaturen von 70 bis 150°C, gegebenenfalls in Gegenwart von Lösungsmitteln, unter Zusatz von an sich bekannten nichtbasischen Umesterungskatalysatoren in einem molaren Verhältnis von Polymethacrylsäureester : $R^2OH$ von 1 : 1 bis 1 : 5, vorzugsweise 1 : 1 bis 1 : 2 umestert.

Es war überraschend, daß bei diesen Verfahrensbedingungen die Umesterung, je nach verwendetem Molverhältnis, nur an einer oder beiden endständigen Methacrylsäureestergruppen stattfindet. Die in der Kette vorliegenden Methacrylsäureester werden nicht oder nur in ganz untergeordnetem, vernachlässigbarem Umfang umgeestert. Voraussetzung hierfür ist allerdings, daß keine basischen Umesterungskataylsatoren, wie Alkalimethylat, keine hohen Überschüsse an Alkoholen der Formel $R^2OH$ und keine Reaktionstemperaturen > 150°C verwendet werden.

Bevorzugte Umesterungskatalysatoren sind Alkyltitanat, Alkylzirkonat, Dialkylzinnacetathalogenid oder Dialkylzinndialkylester, die in Mengen von 0,1 bis 2 Gew.-%, bezogen auf Polymethacrylsäureester, verwendet werden. Beispiele besonders geeigneter Katalysatoren sind Isopropyltitanat, n-Propylzirkonat, Dibutylzinnacetatchlorid, Dibutylzinndiacetat und Dibutylzinndilaurat.

Die Reaktionstemperatur beträgt 70 bis 150°C, vorzugsweise 100 bis 130°C.

Die Reaktion kann mit oder ohne Lösungsmittel durchgeführt werden. Im Falle der Verwendung eines Lösungsmittels bieten sich Toluol, Xylol oder Benzinfraktionen mit einem Siedebereich von 70 bis 140°C an.

In den folgenden Beispielen wird die Herstellung der erfindungsgemäßen Verbindungen noch näher erläutert.

Beispiel 1 A

Herstellung von Polymethylmethacrylat durch radikalische Polymerisation (nicht erfindungsgemäß)

Eine Lösung von 2,04 g Azodiisobuttersäurenitril und 102 g n-Dodecylmercaptan in 100 g Toluol und 542 g (ca. 5,4 Mol) Methylmethacrylat werden innerhalb von 3 h in einen mit 70 g Toluol gefüllten Reaktor gegeben; das vorgelegte Lösungsmittel hat dabei eine Temperatur von 100°C und befindet sich unter einer Stickstoffatmosphäre. Anschließend werden nochmals 1,36 g Azodiisobuttersäurenitril, gelöst in 13,6 g Methylethylketon, innerhalb von 1 h in gleichen Teilen nachgegeben. Schließlich wird das Reaktionsgemisch noch für 1 h bei der gleichbleibenden Temperatur von 100°C weiter erwärmt. Nach Beendigung der Reaktion werden das Lösungsmittel und das Restmonomere bei 130°C/ 1 Torr abdestilliert; es verbleibt eine farblose, viskose Flüssigkeit. Aus der gelchromatographischen Untersuchung ergibt sich für das erhaltene Polymerisat ein numerisches Molekulargewicht $\overline{M}_{nGPC}$ von 1110 und für das Gewichtsmittel des Molekulargewichtes $\overline{M}_{wGPC}$ von 1700; der Uneinheitlichkeitskoeffizient beträgt demnach 1,53. Der Restmonomerengehalt beträgt < 0,1 %.

Beispiele 2 A bis 5 A

Herstellung von Polymethylmethacrylaten unterschiedlichen Molekulargewichtes durch radikalische Polymerisation (nicht erfindungsgemäß)

Es wird verfahren wie in Beispiel 1 A mit der Ausnahme, daß Festkörperkonzentration, Initiatormenge und Menge an Kettenübertragungsagens, wie in Tabelle 1 angegeben, gesenkt werden. In der nachfolgenden Tabelle 1 werden die Zahlen- und Gewichtsmittel des Molekulargewichtes aus der gelpermeationschromatographischen Untersuchung angegeben. Der gefundene Restmonomerengehalt beträgt in allen Fällen < 0,1 %.

Tabelle 1

| Polymethyl-methacrylat Beispiel Nr. | n-Dodecyl-mercaptan [ Gew.-% ] | Festkörper-konzentration [ Gew.-% ] | Molekular-gewicht (GPC) $\overline{M}_{n_{GPC}}$ | Molekular-gewicht (GPC) $\overline{M}_{w_{GPC}}$ | Uneinheitlich-keitsfaktor |
|---|---|---|---|---|---|
| 1 A | 15,8 | 78,8 | 1114 | 1704 | 1,53 |
| 2 A | 7,9 | 78,8 | 2120 | 3500 | 1,65 |
| 3 A | 5,3 | 78,8 | 3200 | 5900 | 1,84 |
| 4 A | 3,2 | 70,2 | 5400 | 10500 | 1,95 |
| 5 A | 0,25 | 50,6 | 52000 | 115000 | 2,21 |

Beispiele 6 A und 7 A

Herstellung von Poly-n-butylmethacrylaten durch radikalische Polymerisation (nicht erfindungsgemäß)

Es wird verfahren wie in Beispiel 1 A mit dem Unterschied, daß anstelle von Methylmethacrylat n-Butylmethacrylat eingesetzt wird. In Beispiel 7 A werden darüber hinaus anstelle von 102 g n-Dodecylmercaptan 102 g tertiär-Dodecylmercaptan eingesetzt.

Aus der gelchromatographischen Untersuchung ergeben sich für die erhaltenen Polymerisate 6 A/7 A numerische Molekulargewichte $\overline{M}_{nGPC}$ von 1165/1120 und für die Gewichtsmittel der Molekulargewichte $\overline{M}_{wGPC}$ von 1678/1670, die Uneinheitlichkeitskoeffizienten betragen demnach 1,44/1,49. Die Restmonomerengehalte werden zu < 0,1 % ermittelt.

Beispiel 8 A

Herstellung von Poly-2-ethyl-hexylmethacrylat durch radikalische Polymerisation (nicht erfindungsgemäß)

Es wird verfahren wie in Beispiel 1 A mit dem Unterschied, daß anstelle von Methylmethacrylat 542 g (2,8 Mol) 2-Ethylhexylmethacrylat eingesetzt werden. Aus der gelchromatographischen Untersuchung ergibt sich für das erhaltene

Polymerisat ein numerisches Molekulargewicht $\overline{M}_{nGPC}$ von 1173 und für das Gewichtsmittel des Molekulargewichtes $\overline{M}_{wGPC}$ von 1572, der Uneinheitlichkeitskoeffizient beträgt demnach 1,34. Der Restmonomerengehalt wird zu < 0,1 % ermittelt.

Beispiel 9 A

Herstellung eines Methylmethacrylat-n-Butylmethacrylat-Copolymeren durch radikalische Polymerisation (nicht erfindungsgemäß)

Es wird verfahren wie in Beispiel 1 A mit dem Unterschied, daß anstelle von Methylmethacrylat ein Gemisch von 542 g (5,4 Mol) Methylmethacrylat und 542 g (3,8 Mol) n-Butylmethacrylat eingesetzt wird.

Aus der gaschromatographischen Untersuchung ergibt sich für das erhaltene Copolymerisat ein numerisches Molekulargewicht $\overline{M}_{nGPC}$ von 2080 und für das Gewichtsmittel des Molekulargewichtes $\overline{M}_{wGPC}$ von 2900; der Uneinheitlichkeitskoeffizient beträgt demnach 1,64. Der Restmonomerengehalt wird zu < 0,1 % ermittelt.

Beispiel 1 B Herstellung eines α-Methyl-ω-hydroxypolyethylenoxids (nicht erfindungsgemäß)

64 g (ca. 2 Mol) Methanol und 23 g (ca. 0,33 Mol) Kaliummethylat werden in einen Reaktor gegeben. Nach sorgfältiger Spülung mit Reinstickstoff wird auf 110°C geheizt, und es werden 2360 g (ca. 54 Mol) Ethylenoxid so schnell zugegeben, daß die Reaktorinnentemperatur 120°C und der Druck 6 bar nicht überschreiten. Nach vollständiger Einleitung des Ethylenoxids wird die Temperatur so lange auf 115°C gehalten, bis daß gleichbleibender Druck das Ende der Nachreaktion anzeigt. Schließlich werden bei 80 bis 90°C die nicht umgesetzten Monomeren unter Vakuum entfernt.

Das erhaltene Produkt wird mit Hilfe von Phosphorsäure neutralisiert und das Wasser durch Destillation, das entstandene Kaliumphosphat durch Filtration zusammen mit einem Filterhilfsmittel entfernt. Das aus der Bestimmung der Hydroxylzahl bei einer angenommenen Funktionalität von 1 ermittelte Molekulargewicht $M_{OHZ}$ beträgt 1015.

Beispiel 2 B

Herstellung eines α-Methyl-ω-hydroxyethylenoxidpropylenoxid-Copolymeren (nicht erfindungsgemäß)

Es wird verfahren wie in Beispiel 1 B mit dem Unterschied, daß 32 g (ca. 1 Mol) Methanol und 34 g (ca. 0,46 Mol) Kaliummethylat und, anstelle von Ethylenoxid, ein Gemisch von 4196 g (ca. 95 Mol) Ethylenoxid und 739 g (ca. 12,7 Mol) Propylenoxid eingesetzt werden.

Das aus der Bestimmung der Hydroxylzahl bei einer angenommenen Funktionalität von 1 ermittelte Molekulargewicht $M_{OHZ}$ beträgt 2940.

Beispiel 3 B

Herstellung eines α-Sulfopropyl-ω-hydroxypolyethers (nicht erfindungsgemäß)

Es wird zunächst verfahren wie in Beispiel 1 B mit dem Unterschied, daß neben 7 g (ca. 0,1 Mol) Kaliummethylat als Startalkohol 58 g (ca. 1 Mol) Allylalkohol und eine Menge von 1016 g (ca. 23,1 Mol) Ethylenoxid und 303,6 g (ca. 5,2 Mol) Propylenoxid eingesetzt werden.

Das aus der Bestimmung der Hydroxylzahl bei einer angenommenen Funktionalität von 1 ermittelte Molekulargewicht beträgt 1190, die Jodzahl läßt auf eine Ausbeute von 90,1 % Allylpolyether schließen.

1190 g (ca. 1 Mol) des erhaltenen α-Allyloxy-ω-hydroxypolyethers werden mit 660 g Wasser, 376 g Ethanol und 0,8 g Manganacetat versetzt und mit 30 gew.-%iger Natronlauge auf einen pH-Wert von 8,1 eingestellt. Bei einer Temperatur von 25°C wird während 4 h eine Lösung von 114 g (0,6 Mol) Natriumpyrosulfit in 270 g Wasser unter gleichzeitigem Einleiten von feinverteilter Luft in Mengen von 10 l/h zugesetzt, wobei der pH-Wert durch mehrere Zugaben von 30 gew.-%iger Natronlauge in einem Bereich von 7,5 bis 8,5 gehalten wird. Nach 2 h Nachreaktion wird mit verdünnter Phosphorsäure neutralisiert und das Polyethersulfonat aufgearbeitet.

Aus der Hydroxylzahl des erhaltenen Produktes läßt sich bei einer angenommenen Funktionalität von 1 ein Molekulargewicht von 1280 errechnen. Aus dem ermittelten Schwefelgehalt läßt sich ein Umsatz von 98 % und aus der Jodzahl von 95 % errechnen; die Säurezahl beträgt 0,5.

Beispiel 4 B

Herstellung eines ω-Hydroxypolystyrols (nicht erfindungsgemäß)

100 g Xylol werden unter einer Stickstoffatmosphäre in einem mit einem Rührer versehenen Reaktor auf 120°C erhitzt. Dazu wird innerhalb von 3 h unter Aufrechterhaltung der Temperatur von 120°C ein Gemisch aus 1560 g (ca. 15 Mol) Styrol, 78,1 g (ca. 1 Mol) 1-Mercaptoethanol-2, 4,1 g Azodiisobuttersäuredinitril und 310 g getrocknetes Xylol zugegeben. Nach Beendigung der Zugabe des Gemisches erfolgt eine Nachreaktion für ca. 15 Minuten, anschließend werden 0,16 g Methylhydrochinon zugesetzt. Durch Destillation im Vakuum (60 bis 80°C/20 Torr) werden überschüssiges Styrol, 1-Mercaptoethanol-2 und Xylol abgetrennt. Nach Auffüllen mit Xylol wird eine farblose, viskose Lösung des erhaltenen ω-Hydroxypolystyrols mit einer Konzentration von ca. 62 Gew.-% erhalten.

Aus der gelchromatographischen Untersuchung ergibt sich ein numerisches Molekulargewicht $\overline{M}_{nGPC}$ von 870 und für das Gewichtsmittel des Molekulargewichtes $\overline{M}_{wGPC}$ von 1380; der Uneinheitlichkeitskoeffizient beträgt demnach 1,59. Durch Dampfdruckosmometrie wird ein Wert von $\overline{M}_{nOsm}$ von 820 erhalten. Mit Hilfe des über die Hydroxylzahl ermittelten Molekulargewichtes $M_{OHZ}$ von 875 kann eine Funktionalität von $F_{GPC}$ = 0,99 aus der gelchromatographischen Bestimmung und von $F_{Osm}$ = 0,94 aus der dampfdruckosmometrischen Bestimmung ermittelt werden.

Beispiel 5 B

Herstellung eines ω-Hydroxypoly-2-ethylhexylmethacrylates (nicht erfindungsgemäß)

Es wird verfahren wie in Beispiel 4 B beschrieben mit der Ausnahme, daß anstelle von Styrol 520 g (ca. 2,6 Mol) 2-Ethylhexylmethacrylat neben 29,3 g (ca. 0,37 Mol) 1-Mercaptoethanol-2, 252 g Xylol und 0,275 g Azodiisobuttersäuredinitril eingesetzt werden; die Reaktionstemperatur beträgt 100°C.

Aus der gelchromatographischen Untersuchung ergibt sich ein numerisches Molekulargewicht $\overline{M}_{nGPC}$ von 1250 und ein Gewichtsmittel des Molekulargewichtes $\overline{M}_{wGPC}$ von 2075; der Uneinheitlichkeitskoeffizient beträgt demnach 1,66. Durch Dampfdruckosmometrie wird ein Wert von $\overline{M}_{nOsm}$ von 1270 erhalten. Mit Hilfe des über die Hydroxylzahl ermittelten Molekulargewichtes $M_{OHZ}$ von 1310 kann eine Funktionalität von $F_{GPC}$ = 0,95 und von $F_{Osm}$ = 0,97 aus der dampfdruckosmometrischen Bestimmung ermittelt werden.

Beispiel 1 C

Herstellung eines Polymethylmethacrylat-block-polyethylenoxid-Copolymeren (erfindungsgemäß)

1110 g (ca. 1 Mol) des Polymethylmethacrylates aus Beispiel 1 A, 1015 g (ca. 1 Mol) des Polyethers aus Beispiel 1 B und 475 g Toluol werden unter Reinstickstoff in einem Reaktor auf ca. 120°C erwärmt und dabei das Lösungsmittel unter gleichzeitiger Entfernung von Wasserspuren abdestilliert. Bei ca. 100°C erfolgt die Zugabe von 4,25 g Isopropyltitanat und unmittelbar danach das Einstellen eines Vakuums von wenigen Torr und gleichzeitiger Erhöhung der Reaktorinnentemperatur auf ca. 140°C. Das bei der einsetzenden Reaktion entstehende Methanol wird sofort durch

Absaugen entfernt. Nach einstündiger Reaktionsdauer erfolgt eine zweite Zugabe von 4,25 g Isopropyltitanat. Nach ca. 6 h ist die Bildung von Methanol und damit die Reaktion beendet.

Die gaschromatographische Untersuchung des Destillats hinsichtlich der erhaltenen Methanolmenge läßt auf einen quantitativen Umsatz schließen. Das durch gelpermeationschromatographische Untersuchung erhaltene numerische Molekulargewicht $\overline{M}_{nGPC}$ beträgt 2026, das Gewichtsmittel $\overline{M}_{WGPC}$ 2634, womit sich ein Uneinheitlichkeitskoeffizient von 1,30 errechnet.

Das nach Hydrolyse des Katalysators erhaltene wasserlösliche Produkt ist leicht gelblich und hat einen Schmelzpunkt von ca. 36°C, seine Dichte beträgt 1,12 g/cm$^3$ und der Flammpunkt 196°C.

Beispiele 2 C bis 9 C

Herstellung von Polymethacrylat-block-polyalkylenoxid-Copolymeren (erfindungsgemäß)

Es wird grundsätzlich verfahren wie in Beispiel 1 C beschrieben mit dem Unterschied, daß verschiedene Polymethacrylate und Polyalkylenoxide eingesetzt werden. In der nachfolgenden Tabelle 2 sind neben Art und Menge des Polymethacrylats Art und Menge des Polyalkylenoxids angegeben. Darüber hinaus finden sich in dieser Tabelle das aus der Gelpermeationschromatographie erhaltene numerische Molekulargewicht $\overline{M}_n$ und der Uneinheitlichkeitskoeffizient. Aus der Ermittlung der Hydroxylzahl und der gelpermeationschromatographischen Untersuchung läßt sich eine weitgehend quantitative Umsetzung ableiten.

Tabelle 2

| Beispiel Nr. | Polymethacrylat aus Beispiel Nr. | Art | Menge [g] | Mol | Polyalkylenoxidmonool aus Beispiel Nr. | Art | Menge [g] | $\bar{M}_n$ GPC | $\bar{M}_w/\bar{M}_n$ |
|---|---|---|---|---|---|---|---|---|---|
| 1 C | 1 A | MMA | 1110 | 1 | 1 B | PEO | 1015 | 2026 | 1,30 |
| 2 C | 1 A | MMA | 1110 | 1 | 2 B | PEO/PO | 2940 | 4161 | 1,43 |
| 3 C | 2 A | MMA | 530 | 0,25 | 3 B | PEO/PO-$SO_3Na$ | 320 | 2095 | 1,40 |
| 4 C | 3 A | MMA | 640 | 0,2 | 1 B | PEO | 203 | 4220 | 1,66 |
| 5 C | 4 A | MMA | 540 | 0,1 | 1 B | PEO | 102 | 6320 | 2,21 |
| 6 C | 5 A | MMA | 520 | 0,01 | 1 B | PEO | 10,2 | 52600 | 3,82 |
| 7 C | 6 A | BMA | 582 | 0,5 | 3 B | PEO/PO-$SO_3Na$ | 640 | 2320 | 1,38 |
| 8 C | 8 A | EHMA | 586 | 0,5 | 1 B | PEO | 507 | 2140 | 1,28 |
| 9 C | 9 A | MMA/BMA | 520 | 0,25 | 1 B | PEO | 254 | 3020 | 1,52 |

Beispiel 10 C

Herstellung von Polymethylmethacrylat mit einer terminalen Stearylgruppe (erfindungsgemäß)

1110 g (ca. 1 Mol) Polymethylmethacrylat aus Beispiel 1 A, 1350 g (ca. 5 Mol) Stearylalkohol und 475 g Toluol werden unter Reinstickstoff in einem Reaktor auf 125°C erhitzt, wobei das Lösungsmittel unter gleichzeitiger Entfernung von Wasserspuren abdestilliert wird. Anschließend wird auf 130°C erhitzt und 23 g Dibutylzinnacetatchlorid hinzugegeben; nach guter Durchmischung wird ein Vakuum von 10 Torr eingestellt. Das freiwerdende Methanol wird sofort durch Absaugen entfernt und an einer Kühlfalle kondensiert. Nach etwa 5 h bei 130°C ist die Bildung von Methanol und damit die Reaktion beendet.

Die gravimetrische und gaschromatographische Bestimmung des Methanols im Destillat ergeben einen Umsatz von Polymer und Fettalkohol im molaren Verhältnis von 1 : 1,10. Die gaschromatographische Analyse und die Ermittlung der Hydroxylzahl ergeben einen Umsatz im molaren Verhältnis von 1 : 1,04.

Beispiel 11 C

Herstellung von Polymethylmethacrylat mit zwei terminalen Stearylgruppen (erfindungsgemäß)

Es wird verfahren wie in Beispiel 10 C mit der Ausnahme, daß anstelle von Dibutylzinnchloridacetat 23 g Isopropyltitanat als Katalysator eingesetzt werden und die Reaktion bei einer Temperatur von 150°C durchgeführt wird.

Die gravimetrische und gaschromatographische Bestimmung des Methanols im Destillat ergeben einen Umsatz von Polymer und Fettalkohol im molaren Verhältnis von 1 : 1,95. Die gaschromatographische Analyse des Produktes und die Ermittlung der Hydroxylzahl ergeben einen Umsatz im molaren Verhältnis von 1 : 1,97.

Beispiel 12 C

Herstellung von Poly-n-butylmethacrylat mit einer terminalen Diethylaminoethylgruppe und deren protonierte bzw. quaternierte Derivate (erfindungsgemäß)

1165 g (ca. 1 Mol) Poly-n-butylmethacrylat aus Beispiel 7 A, 117 g (ca. 1 Mol) Diethylaminoethanol und 500 g Xylol werden unter Reinstickstoff in einem Reaktor mit aufgesetztem Rückflußkühler auf 140°C erhitzt, wobei das Lösungsmittel solange unter Normaldruck abdestilliert wird, bis sichtbar keine Wasserspuren mehr vorhanden sind. Anschließend werden bei 130°C 2,1 g Isopropyltitanat hinzugegeben und verrührt. Das sich freisetzende n-Butanol wird durch Fraktionierung vom unumgesetzten Diethylaminoethanol getrennt und entfernt. Nach 1 h und 3 h Reaktionsdauer wird nochmals jeweils die gleiche Menge Katalysator zugegeben. Nach Erreichen einer Kopftemperatur von 135°C, d.h. nach etwa 7 h Dauer, ist die Reaktion beendet.

Die gravimetrische und gaschromatographische Bestimmung des n-Butanols sowie die gaschromatographische Analyse und die Ermittlung der Hydroxylzahl des gelblichen Produktes ergeben einen Umsatz von ca. 96 % d.Th.

In 123,5 g (ca. 0,1 Mol) des erhaltenen Produktes als xylolische Lösung wird das Lösungsmittel durch Destillation entfernt und an seiner Stelle n-Propanol eingesetzt. Danach werden 6,0 g (ca. 0,1 Mol) Essigsäure zugegeben und innerhalb 1 h verrührt. Der anschließend ermittelte pH-Wert einer 10 %igen wäßrigen Lösung beträgt 6,7.

617 g (ca. 0,5 Mol) des in n-Propanol gelösten Produktes werden in einem Druckreaktor unter Reinstickstoff auf 120°C erhitzt. Darauf wird soviel Methylchlorid eingeleitet, daß ein Druck von 4 bar entsteht. Der eingestellte Druck wird bei 120°C für 4 h aufrechterhalten. Nach anschließender Abkühlung auf Raumtemperatur und Entfernung des überschüssigen Methylchlorids wird ein gelbliches Produkt erhalten.

Aus der Bestimmung des Chloridgehaltes und der Aminzahl ergibt sich ein Umsatz von 95 bzw. 99 % d.Th.

Beispiel 13 C

Herstellung eines Polymethylmethacrylates mit einer terminalen Alkenylgruppe (erfindungsgemäß)

1110 g (ca. 1 Mol) Polymethylmethacrylat aus Beispiel 1 A, 100 g (ca. 1 Mol) 1-Hexenol-6 und 1200 g Toluol werden unter Reinstickstoff in einem Reaktor mit aufgesetzter Fraktionierkolonne auf ≥ 110°C erhitzt, wobei das Lösungsmittel solange unter Normaldruck abdestilliert wird, bis sichtbar keine Wasserspuren mehr vorhanden sind. Anschließend werden bei 125°C 2,4 g Isopropyltitanat hinzugegeben. Das jetzt freiwerdende Methanol wird durch Fraktionierung vom Toluol getrennt und anschließend kondensiert. Nach 1 h und 3 h Reaktionsdauer wird nochmals jeweils die gleiche Menge Katalysator zugegeben. Nach Erreichen einer Kopftemperatur von 110°C, d.h. nach etwa 6 h Dauer, ist die Reaktion beendet.

Die gravimetrische und gaschromatographische Bestimmung des Methanols ergeben einen Umsatz von 98 %. Die gaschromatographische Analyse und die Ermittlung der Hydroxylzahl des gelblichen Produktes ergeben einen Umsatz von 97 bzw. 98 %.

Beispiel 14 C

Herstellung eines Polymethylmethacrylates mit einer terminalen Perfluoralkylgruppe (erfindungsgemäß)

1110 g (ca. 1 Mol) Polymethylmethacrylat aus Beispiel 1 A, 464 g (ca. 1 Mol) Perfluoroctylethanol und 475 g Toluol werden unter Reinstickstoff in einem Reaktor mit einer aufgesetzten Fraktionierkolonne auf ≥ 110°C erhitzt, wobei das Lösungsmittel solange unter Normaldruck abdestilliert wird, bis sichtbar keine Wasserspuren mehr vorhanden sind. Anschließend werden bei 125°C 2,4 g Isopropyltitanat zugegeben. Das jetzt freiwerdende Methanol wird durch Fraktionierung vom Toluol getrennt und anschließend kondensiert. Nach 1 h und nach 3 h Reaktionsdauer wird nochmalig jeweils die gleiche Menge Katalysator zugegeben. Nach Erreichen einer Kopftemperatur von 110°C, d.h. nach etwa 6 h Dauer, ist die Reaktion beendet.

Die gravimetrische sowie gaschromatographische Bestimmung des Methanols im Destillat ergeben einen Umsatz von 97 % d.Th. Die gaschromatographische Analyse und die Ermittlung der Hydroxylzahl des leicht gelblichen Produktes ergeben einen Umsatz von 99 bzw. 97 % d.Th.

Beispiel 15 C

Herstellung eines Polymethylmethacrylat-α,ω-diols (erfindungsgemäß)

1110 g (1 Mol) Polymethylmethacrylat aus Beispiel 1 A, 354 g (ca. 3 Mol) Hexandiol-1,6 und 1400 g Xylol werden unter Reinstickstoff in einem Reaktor mit einer aufgesetzten Fraktionierkolonne auf 145°C erhitzt, wobei das Lösungsmittel solange unter Normaldruck abdestilliert wird, bis sichtbar keine Wasserspuren mehr vorhanden sind. Anschließend werden bei 145°C 3,7 g Isopropyltitanat zugegeben. Das jetzt freiwerdende Methanol wird durch Fraktionierung vom Toluol getrennt und anschließend kondensiert. Nach 1 h und 3 h Reaktionsdauer wird nochmalig jeweils die gleiche Menge Katalysator zugegeben. Nach Erreichen einer Kopftemperatur von 135°C, d.h. nach etwa 12 h, wird die Reaktion beendet.

Die gravimetrische sowie die gaschromatographische Bestimmung des Methanols im Destillat ergeben einen Umsatz, der einem molaren Verhältnis von Polymer und Diol von 1 : 1,6 entspricht. Die gaschromatographische Analyse am unaufgearbeiteten Reaktionsprodukt sowie die Ermittlung der Hydroxylzahl des nach viermaligem Auswaschen mit einer 20 %igen wäßrigen Natriumchloridlösung erhaltenen farblosen, klaren Produktes ergibt einen Umsatz, der einem molaren Verhältnis von 1 : 1,7 entspricht. Aus dem durch Dampfdruckosmometrie erhaltenen Molekulargewicht von 1310 und der Hydroxylzahl läßt sich eine Funktionalität von 1,65 berechnen.

Beispiel 16 C

Herstellung eines Polyethylhexylmethacrylat-block-polystyrol-Copolymeren (erfindungsgemäß)

1173 g (ca. 1 Mol) Poly-2-ethylhexylmethacrylat aus Beispiel 8 A, 870 g (ca. 1 Mol) des Polystyrolmonools aus Beispiel 4 B und 875 g Toluol werden unter Reinstickstoff in einem Reaktor unter Vakuum (1 Torr) auf 130°C erhitzt, wobei das Lösungsmittel und gegebenenfalls vorhandene Wasserspuren abdestilliert werden. Anschließend werden bei 145°C 8,8 g Isopropyltitanat hinzugegeben. Das freiwerdende 2-Ethylhexanol wird durch Absaugen entfernt und an zwei mit Trockeneis gefüllten Kühlfallen kondensiert. Nach etwa 10 h ist die Reaktion beendet, was an der Beendigung der Freisetzung von 2-Ethylhexanol sichtbar wird.

Die gravimetrische sowie gaschromatographische Bestimmung des 2-Ethylhexanols ergeben einen Umsatz von 96 % d.Th. Die gaschromatographische Analyse und die Ermittlung der Hydroxylzahl des gelblichen Produktes ergeben einen Umsatz von 95 % d.Th. Aus der gelpermeationschromatographischen Untersuchung ergeben sich ein numerisches Molekulargewicht $\overline{M}_{nGPC}$ von 2010 und ein Gewichtsmittel $\overline{M}_{wGPC}$ von 2940, woraus ein Uneinheitlichkeitskoeffizient von 1,46 resultiert. Aus der dampfdruckosmometrischen Untersuchung ergibt sich ein numerisches Molekulargewicht $\overline{M}_{nOsm}$ von 2230.

Beispiel 17 C

Herstellung eines Polymethylmethacrylat-block-poly-2-ethylhexylmethacrylat-Copolymeren (erfindungsgemäß)

1110 g (ca. 1 Mol) Polymethylmethacrylat aus Beispiel 1 A, 1250 g (ca. 1 Mol) des Poly-2-ethylhexylmethacrylatmonools aus Beispiel 5 B und 1037 g Toluol werden wie in Beispiel 16 C beschrieben umgesetzt.

Die gravimetrische sowie die gaschromatographische Bestimmung des Methanols ergeben einen Umsatz von 98 % d.Th. Die Ermittlung der Hydroxylzahl des gelblichen Produktes ergibt einen Umsatz von > 95 % d.Th. Aus der gelchromatographischen Untersuchung ergeben sich ein numerisches Molekulargewicht $\overline{M}_{nGPC}$ von 2320 und ein Gewichtsmittel $\overline{M}_{wGPC}$ von 3640, woraus ein Uneinheitlichkeitskoeffizient von 1,57 resultiert. Aus der dampfdruckosmometrischen Untersuchung ergibt sich ein numerisches Molekulargewicht $\overline{M}_{nOsm}$ von 2270.

**Patentansprüche**

**1.** Polymethacrylsäureester der allgemeinen Formel

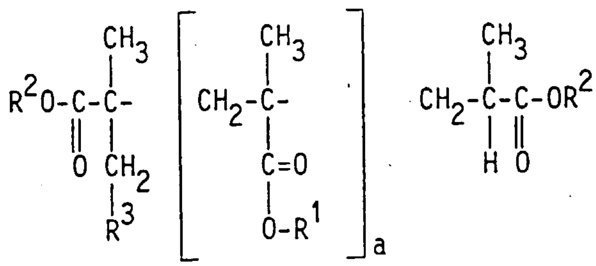

wobei die Reste

- $R^1$ gleich oder verschieden sind und Alkylreste mit 1 bis 8 Kohlenstoffatomen, Perfluoralkyl- oder Dialkylaminoalkylreste bedeuten und
- $R^2$ die Bedeutung der Reste $R^1$ haben oder von einem Alkohol $R^2OH$ abgeleitete Reste sind,
- $R^3$ der Rest eines an sich bekannten Kettenreglers ist, wobei der Rest $R^3$ frei von aktiven Wasserstoffatomen ist, und
- a eine Zahl ist, die im Mittel ≥ 4 ist,

mit der Maßgabe, daß der Alkohol $R^2OH$ einen höheren Siedepunkt als der Alkohol $R^1OH$ hat und im durchschnittlichen Molekül mindestens 1 Rest $R^2$ ungleich $R^1$ ist.

**2.** Polymethacrylsäureester nach Anspruch 1, dadurch gekennzeichnet, daß $R^2$ ein Alkylrest mit einer größeren Anzahl Kohlenstoffatome als der Rest $R^1$ oder ein Alkenylrest ist.

**3.** Polymethacrylsäureester nach Anspruch 2, dadurch gekennzeichnet, daß der Alkenylrest ein Rest der Formel

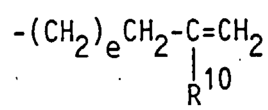

ist, wobei
$R^{10}$ ein Wasserstoff- oder Methylrest und e eine Zahl von 0 bis 10 ist.

**4.** Polymethacrylsäureester nach Anspruch 1, dadurch gekennzeichnet, daß der Rest $R^2$ ein $-R^4-OH$-Rest ist, wobei $R^4$ ein zweiwertiger aliphatischer Kohlenwasserstoffrest mit 2 bis 20 Kohlenstoffatomen ist.

**5.** Polymethacrylsäureester nach Anspruch 1, dadurch gekennzeichnet, daß der Rest $R^2$ ein $-(C_nH_{2n}O-)_bR^5$-Rest ist, wobei $R^5$ ein Wasserstoff-, Alkyl-, Alkaryl-, Alkenyl- oder Sulfopropylrest, n eine Zahl von 2 bis 18 und b eine Zahl ≥ 1 ist.

**6.** Polymethacrylsäureester nach Anspruch 1, dadurch gekennzeichnet, daß der Rest $R^2$ ein

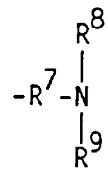

Rest oder der Rest

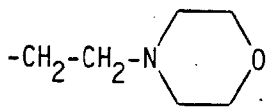

ist, wobei

$R^7$ ein zweiwertiger aliphatischer Kohlenwasserstoffrest mit 2 bis 4 Kohlenstoffatomen in der Kohlenstoffkette oder der Rest $-(C_nH_{2n}O-)_mC_pH_{2p}-$ (n = 2, 3 oder 4; m = 1 bis 20; p = 2, 3 oder 4) ist,

$R^8$ und $R^9$ gleich oder verschieden und jeweils Alkylreste mit 1 bis 18 Kohlenstoffatomen sind,

wobei das Stickstoffatom in protonierter oder quaternierter Form vorliegen kann.

**7.** Polymethacrylsäureester nach Anspruch 1, dadurch gekennzeichnet, daß der Rest $R^2$ ein $-(CH_2)_cC_dF_{2d+1}$-Rest ist, wobei c eine Zahl von 2 bis 10 und d eine Zahl von 1 bis 12 ist.

**8.** Polymethacrylsäureester nach Anspruch 1, dadurch gekennzeichnet, daß der Rest $R^2$ ein

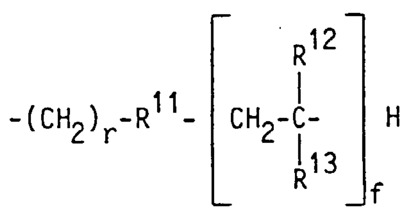

Rest ist, wobei

$R^{11}$ ein Sauerstoff- oder Schwefelrest,
$R^{12}$ ein Wasserstoff- oder Methylrest,
$R^{13}$ ein Phenyl-,

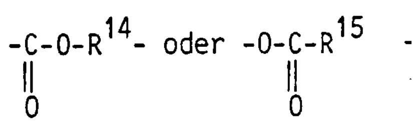

Rest ist, wobei

$R^{14}$ ein Alkyl-, Alkylfluoralkyl- oder ein Dialkylaminoalkylrest ist, wobei das Stickstoffatom in protonierter oder quaternierter Form vorliegen kann,
$R^{15}$ ein Alkylrest,

r eine Zahl von 2 bis 6 und
f eine Zahl von 2 bis 100 ist.

**9.** Verfahren zur Herstellung der Polymethacrylsäureester nach einem oder mehreren der vorhergehenden Ansprüche, dadurch gekennzeichnet, daß man durch radikalische Polymerisation in Gegenwart eines Kettenreglers erhaltene Polymethacrylsäureester der allgemeinen Formel

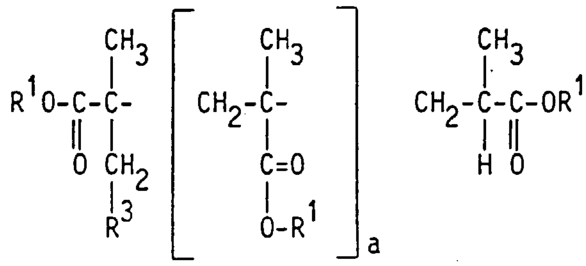

wobei die Reste $R^1$ und $R^3$ und der Index a die bereits angegebene Bedeutung haben, mit Alkoholen der Formel $R^2OH$ bei Temperaturen von 70 bis 150°C, gegebenenfalls in Gegenwart von Lösungsmitteln, unter Zusatz von an sich bekannten nichtbasischen Umesterungskatalysatoren in einem molaren Verhältnis von Polymethacrylsäureester : $R^2OH$ von 1 : 1 bis 1 : 5 umestert.

**10.** Verfahren nach Anspruch 9, dadurch gekennzeichnet, daß man die Umesterung in einem molaren Verhältnis von Polymethacrylsäureester : $R^2OH$ von 1 : 1 bis 1 : 2 durchführt.

**11.** Verfahren nach Anspruch 9 oder 10, dadurch gekennzeichnet, daß man als Umesterungskatalysatoren Alkyltitanat, Alkylzirkonat, Dialkylzinnacetathalogenid oder Dialkylzinndialkylester in Mengen von 0,1 bis 2 Gew.-%, bezogen auf Polymethacrylsäureester, verwendet.

**Claims**

**1.** Polymethacrylic esters of the general formula

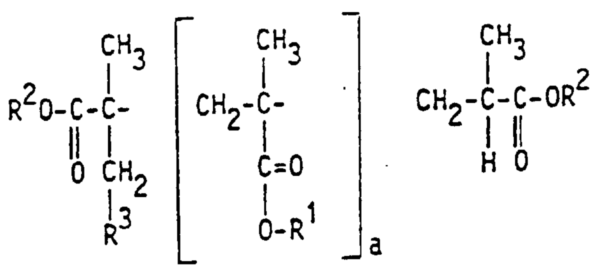

where the radicals

- $R^1$ are identical or different and are alkyl radicals having from 1 to 8 carbon atoms, perfluoroalkyl radicals or dialkylaminoalkyl radicals and
- $R^2$ are as defined for the radicals $R^1$ or are radicals derived from an alcohol $R^2OH$,
- $R^3$ is the radical of a chain regulator known per se, with the radical $R^3$ being free of active hydrogen atoms, and
- a is a number which is on average ≥ 4,

with the proviso that the alcohol $R^2OH$ has a boiling point higher than that of the alcohol $R^1OH$ and in the average molecule at least one radical $R^2$ is not equal to $R^1$.

**2.** Polymethacrylic esters according to Claim 1, characterized in that $R^2$ is an alkyl radical having a greater number of carbon atoms than the radical $R^1$ or is an alkenyl radical.

**3.** Polymethacrylic esters according to Claim 2, characterized in that the alkenyl radical is a radical of the formula

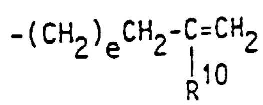 ,

where
$R^{10}$ is a hydrogen or methyl radical and e is a number from 0 to 10.

4. Polymethacrylic esters according to Claim 1, characterized in that the radical $R^2$ is an $-R^4-OH$ radical, where $R^4$ is a divalent aliphatic hydrocarbon radical having from 2 to 20 carbon atoms.

5. Polymethacrylic esters according to Claim 1, characterized in that the radical $R^2$ is a $-(C_nH_{2n}O-)_bR^5$ radical, where $R^5$ is a hydrogen, alkyl, alkaryl, alkenyl or sulphopropyl radical, n is a number from 2 to 18 and b is a number $\geq 1$.

6. Polymethacrylic esters according to Claim 1, characterized in that the radical $R^2$ is a

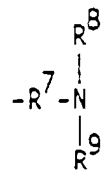

radical or the radical

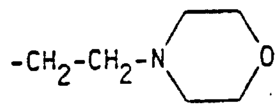,

where

$R^7$ is a divalent aliphatic hydrocarbon radical having from 2 to 4 carbon atoms in the carbon chain or the radical $-(C_nH_{2n}O-)_mC_pH_{2p}-$ (n = 2, 3 or 4; m = 1 to 20; p = 2, 3 or 4),
$R^8$ and $R^9$ are identical or different and are each alkyl radicals having from 1 to 18 carbon atoms,

where the nitrogen atom can be present in protonated or quaternized form.

7. Polymethacrylic esters according to Claim 1, characterized in that the radical $R^2$ is a $-(CH_2)_cC_dF_{2d+1}$ radical, where c is a number from 2 to 10 and d is a number from 1 to 12.

8. Polymethacrylic esters according to Claim 1, characterized in that the radical $R^2$ is a

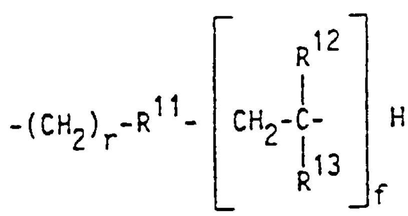

radical, where

$R^{11}$ is an oxygen or sulphur radical,
$R^{12}$ is a hydrogen or methyl radical,
$R^{13}$ is a phenyl,

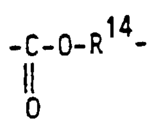

or

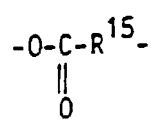

radical, where

$R^{14}$ is an alkyl, alkylfluoroalkyl or a dialkylaminoalkyl radical, where the nitrogen atom can be present in protonated or quaternized form,
$R^{15}$ is an alkyl radical,

r is a number from 2 to 6 and

f is a number from 2 to 100.

**9.** Process for preparing the polymethacrylic esters according to one or more of the preceding claims, characterized in that polymethacrylic esters of the general formula

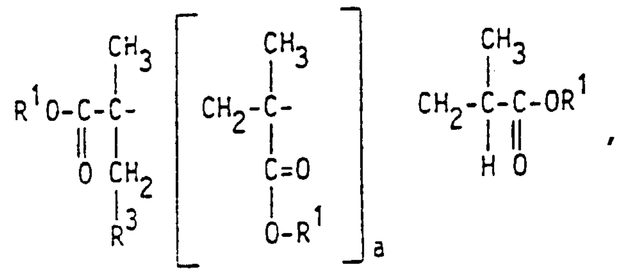

where the radicals $R^1$ and $R^3$ and the index a are as defined above, obtained by free-radical polymerization in the presence of a chain regulator are transesterified with alcohols of the formula $R^2OH$ at temperatures of from 70 to 150°C, in the presence or absence of solvents, with addition of non-basic transesterification catalysts known per se in a molar ratio of polymethacrylic ester : $R^2OH$ of from 1 : 1 to 1 : 5.

**10.** Process according to Claim 9, characterized in that the transesterification is carried out in a molar ratio of polymethacrylic ester : $R^2OH$ of from 1 : 1 to 1 : 2.

**11.** Process according to Claim 9 or 10, characterized in that the transesterification catalysts used are alkyl titanate, alkyl zirconate, dialkyltin acetate halide or dialkyltin dialkyl ester in amounts of from 0.1 to 2% by weight, based on polymethacrylic ester.

**Revendications**

**1.** Polyesters méthacryliques répondant à la formule générale

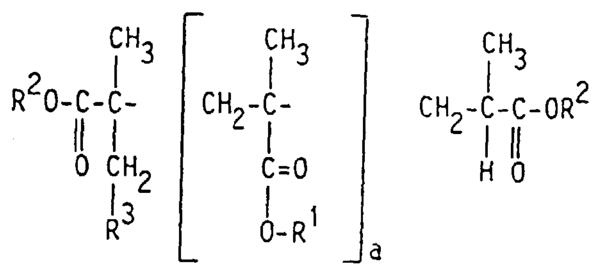

où

les restes $R^1$ sont identiques ou différents et signifient des restes alkyles ayant de 1 à 8 atomes de carbone, des restes perfluoroalkyles ou dialkylaminoalkyles,
les restes $R^2$ ont la signification des restes $R^1$ ou signifient des restes dérivés d'un alcool $R^2OH$,
le reste $R^3$ est le reste d'un régulateur de chaîne connu en soi, ledit reste $R^3$ ne contenant pas d'atomes d'hydrogène, et
a est un nombre qui, en moyenne, est $\geq 4$,

avec la condition que l'alcool $R^2OH$ ait un point d'ébullition situé au-dessus de celui de l'alcool $R^1OH$ et qu'au moins 1 reste $R^2$ soit différent de $R^1$ dans la molécule moyenne.

**2.** Polyesters méthacryliques selon la revendication 1, caractérisés en ce que $R^2$ est un reste alkyle ayant un nombre d'atomes de carbone supérieur à celui du reste $R^1$ ou un reste alkényle.

**3.** Polyesters méthacryliques selon la revendication 2, caractérisés en ce que le reste alkényle est un reste répondant à la formule

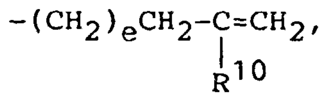

où $R^{10}$ est un reste d'hydrogène ou le reste méthyle, et e est un nombre de 0 à 10.

**4.** Polyesters méthacryliques selon la revendication 1, caractérisés en ce que le reste $R^2$ est un reste $-R^4-OH$ où $R^4$ est un reste hydrocarbure aliphatique bivalent ayant de 2 à 20 atomes de carbone.

**5.** Polyesters méthacryliques selon la revendication 1, caractérisés en ce que le reste $R^2$ est un reste $-(C_nH_{2n}O-)_bR^5$, où $R^5$ est un reste d'hydrogène, un reste alkyle, alcaryle, alkényle ou sulfopropyle, n est un nombre de 2 à 18, et b est un nombre $\geq 1$.

**6.** Polyesters méthacryliques selon la revendication 1, caractérisés en ce que le reste $R^2$ est un reste

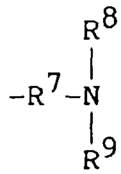

ou le reste

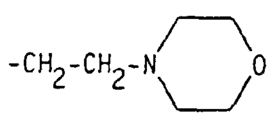

où

$R^7$ est un reste hydrocarbure aliphatique bivalent ayant de 2 à 4 atomes de carbone dans la chaîne hydrocarbonée ou le reste $-(C_nH_{2n}O-)_mC_pH_{2p}-$ (n = 2, 3 ou 4 ; m = 1 à 20 ; p = 2, 3 ou 4),
$R^8$ et $R^9$ sont identiques ou différents et signifient chacun un reste alkyle ayant de 1 à 18 atomes de carbone,

l'atome d'azote pouvant se présenter sous la forme protonée ou quaternisée.

**7.** Polyesters méthacryliques selon la revendication 1, caractérisés en ce que le reste $R^2$ est un reste $-(CH_2)_cC_dF_{2d+1}$, où c est un nombre de 2 à 10, et d est un nombre de 1 à 12.

**8.** Polyesters méthacryliques selon la revendication 1, caractérisés en ce que le reste $R^2$ est un reste

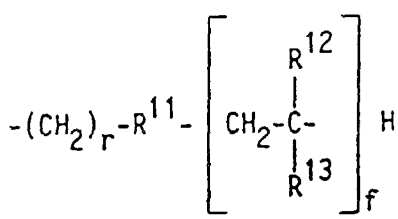

où

$R^{11}$ est un reste d'oxygène ou un reste de soufre,
$R^{12}$ est un reste d'hydrogène ou le reste méthyle,
$R^{13}$ est un reste phényle,

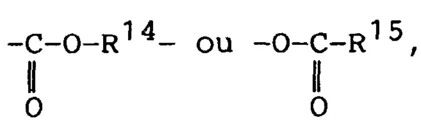

où

$R^{14}$ est un reste alkyle, alkylfluoroalkyle ou dialkylaminoalkyle, l'atome d'azote pouvant se présenter sous la forme protonée ou quaternisée.

$R^{15}$ est un reste alkyle,

r est un nombre de 2 à 6, et

f est un nombre de 2 à 100.

**9.** Procédé de préparation des polyesters méthacryliques selon une ou plusieurs des revendications précédentes, caractérisé en ce qu'on transestérifie des polyesters méthacryliques obtenus par polymérisation radicalaire en présence d'un régulateur de chaîne et répondant à la formule generale

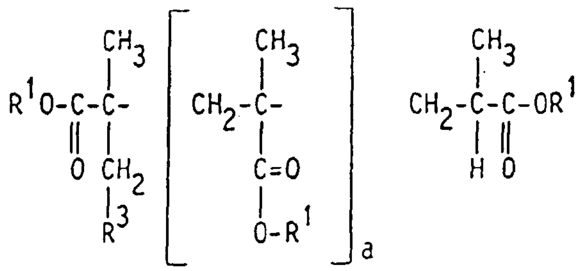

où les restes $R^1$ et $R^3$ et l'indice a ont les significations déjà indiquées, avec des alcools de formule $R^2OH$, à des températures de 70 à 150°C, éventuellement en présence de solvants, avec addition de catalyseurs de transestérification connus en soi, à un rapport molaire des polyesters méthacryliques à $R^2OH$ de 1 : 1 à 1 : 5.

**10.** Procédé selon la revendication 9, caractérisé en ce qu'on effectue la transestérification à un rapport molaire des polyesters méthacryliques à $R^2OH$ de 1 : 1 à 1 : 2.

**11.** Procédé selon la revendication 9 ou 10, caractérisé en ce qu'on utilise, comme catalyseurs de transestérification, un titanate d'alkyle, un zirconate d'alkyle, un acétohalogénure de dialkylétain ou un ester de dialkyl-étain-dialkyle, en des quantités de 0,1 à 2 % en poids par rapport aux polyesters méthacryliques.